# EUROPEAN PATENT SPECIFICATION

(11) **EP 3 594 040 B1**
(45) Date of publication and mention of the grant of the patent: **22.12.2021**
(21) Application number: 19177577.4
(22) Date of filing: 31.05.2019
(51) Int. Cl.: B60K 15/04, B65D 51/16, B65D 53/02, F16J 15/3232, B60K 13/04

(54) **A SEAL STRUCTURING WITH WING FOR UREA AND FUEL TANK LIDS**
DICHTUNGSSTRUKTURIERUNG MIT FLÜGEL FÜR HARNSTOFF- UND KRAFTSTOFFTANKDECKEL
STRUCTURATION D'ÉTANCHÉITÉ À AILE POUR COUVERCLES DE RÉSERVOIRS D'URÉE ET DE CARBURANT

(30) Priority: 29.06.2018 TR 201809294
(43) Date of publication of application: 15.01.2020
(73) Proprietor: Nesan Otomotiv Anonim Sirketi, Izmir (TR)
(72) Inventor: GERÇEKÇI , Emre, Izmir (TR); SEZGIN, Oguz, Izmir (TR)
(74) Representative: Yamankaradeniz, Kemal

(56) References cited:
- EP-A1- 1 889 792
- EP-A1- 2 835 306
- JP-A- H05 338 662
- KR-U- 20150 003 212
- US-A1- 2005 011 896
- US-A1- 2008 006 633

## Description

### Technical Field

The invention is related to a wing type seal structuring which shall prevent the passing of water, dust and foreign materials between the tank inlet and the tank lid in diesel fuel and urea tanks in the commercial vehicles.

The invention specifically is related to a wing type seal structuring which shall prevent the passing of the contaminating particles into the fuel tank in vented type tank lids.

### State Of The Art

Today, it is important to store and maintain the fuel, that is needed for the automobiles, commercial vehicles and heavy vehicles to operate and travel, under appropriate conditions. The fuel tank in automobiles and light commercial vehicles is located inside the vehicle body and is guarded with a lid on the vehicle body in addition to the tank lid. However, for the heavy type of vehicles such as trucks, trailer trucks etc. the fact that the fuel tank is located in a manner that is open to the atmosphere requires the tank lid to be designed in a manner such that it does not allow the contamination of the fuel. Sealing elements such as seals are used between the tank lid and the filler opening in order to prevent the entrance of foreign materials into the fuel tank. Fuel tank lids of threaded type, bayonet type and vented type and the seals that are appropriate for these lid types are commonly used in order to obtain the sealing.

Generally, since the O-ring seals or tank lid seals with a geometry similar to felt have a plane form, they can only be in contact with the frontal surface of the tank inlet and the tank lid. These seals which cannot provide a contact with any of the lateral surfaces of the tank lid create a risk regarding the foreign materials entering into the fuel tanks which are open to the atmosphere. These tank lids are opened and closed in every fuel filling and are prone to the contamination depending on the environmental factors. On the other hand, the tank lid seals used in prior art create a possibility of foreign materials to enter into the fuel tank, by accumulating the dust, water and similar foreign materials, that are brought by the environmental factors, on their surface by time. These foreign materials which can be mixed with the fuel fill the fuel filter system before it is supposed to be filled and increase the costs of maintenance. In addition to that, fuel system elements which have high replacement costs, can also be damaged due to these foreign materials which are capable of directly passing to the fuel pump and fuel injectors.

Fuel lid seals, which are generally manufactured of materials derivative of rubber, are exposed to an extent of alteration in their shape when the lid is screwed. The seals that are used in prior art are exposed to this alteration of shape much more under the screwing pressure, due to the geometry they have, and increase the risk of foreign materials entering into the fuel tank. In addition, the seal surfaces in the vehicles which use different fuels such as urea, are exposed to chemical reactions and are deformed; therefore, they lose their sealing feature by time.

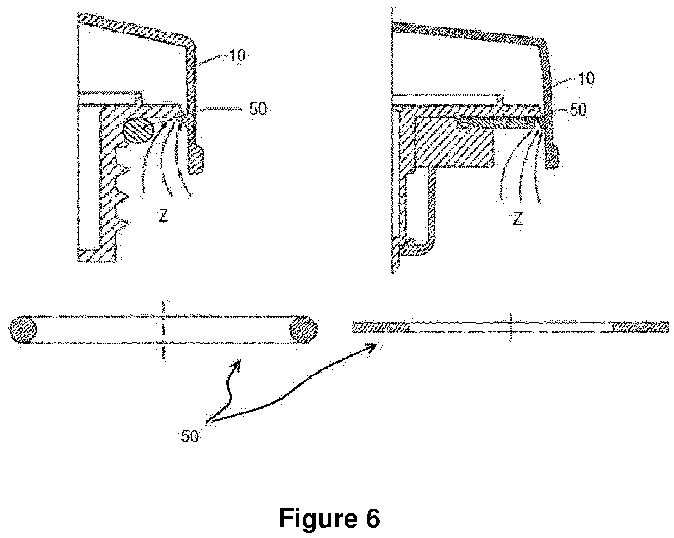

In Figure 6, a cross section view of a threaded type seal (50) and bayonet type seal (50) of the prior art are shown on the tank. According to this, the seals (50) that are used in threaded type tank lid (10) and bayonet type tank lid (10) systems for obtaining a sealing feature in the tank lids, function only by contacting the top surfaces of the respective tank inlet. The elements inside the lid have no protection against the foreign materials such as dust and water, which can enter into the said tank lids from the atmosphere. The foreign materials which accumulate over time on the said tank lids and tank inlets can prevent the operation of the locking mechanism of the lid. The seal structures which are prone to let foreign materials into the fuel tank via the tank lid and the tank inlets due to their geometry cause particles enter into the fuel pump from the tank and consequently to the injecting system and result in serious damages with high maintenance costs in the engine.

An application numbered KR 2015 0003212 U describes a fuel cap for opening and closing a fuel tank injection port of an agricultural work vehicle is disclosed. In the embodiment which is defined in said application, a seal construction has been described and ventilation is provided through the channels formed in the seal and the seal itself does not open or close a ventilation opening. However, present invention discloses that the wing of the seal actively provides air intake/release function.

As a result, due to the disadvantages that are mentioned above and the inadequacy of the existing solutions regarding the issue, a development in the technical field is required.

### Aim of the Invention

The invention aims to solve the above-mentioned disadvantages by being created with an inspiration of the current status of the art.

The main aim of the invention is to provide a structure for sealing by adding a wing to the seal systems that are used in the urea liquid fuel tanks and diesel fuel tanks.

Another aim of the invention is to prevent the foreign materials such as dust and water from entering into tank through the pass and bayonet type fuel tank lids.

Another aim of the invention is to provide a wing type seal structuring which is collapsible, in order to balance the pressure inside the tank in valve ventilation tank lids.

Another aim of the invention is to prevent the accumulation of foreign materials on and about the tank lid due to a seal structuring with double wings.

In order to realize all the aims that are mentioned above and can be understood from the detailed description provided below, the invention relates to a seal structuring for a tank inlet, a tank lid having a tank lid side wall according to claim 1, wherein the seal structuring is a vented type seal and comprises:
- a seal body covering the surrounding of the whole tank inlet by being located between the said tank inlet and the tank lid;
- at least one wing which is formed in the continuation of the said seal body and extending from the seal body to tank lid side wall and contacting the side wall,
- and wherein the seal structuring prevents the pass of contaminating materials, which can come from the outer environment, especially between the threaded type, bayonet type or vented type tank lids and tank inlet, in the diesel fuel and urea liquid tanks in the commercial vehicles,
- and wherein the wing which opens and closes on a valve ventilation threads of the vented type lid and which provides an air intake or an air release between the valve ventilation threads and the vented type seal, in order to tolerate the pressure occurring inside the tank.

The structural and characteristical properties of the invention, along with its all advantages, shall be understood in a clear manner by the figures provided below and the detailed description with reference to these accompanied figures and therefore; an evaluation shall be made by taking these figures and the detailed description into the account.

### Brief Description of the Figures

**Figure 1** is a view of the wing type seal structuring not forming part of the invention on the threaded type tank lid.
**Figure 2** is a view of the wing type seal structuring not forming part of the invention on the bayonet type tank lid.
**Figure 3** is another view of the wing type seal structuring not forming part of the invention on the bayonet type tank lid.
**Figure 4** is another view of the seal structuring not forming part of the invention on the alternative bayonet type tank lid with a structuring with double wings.
**Figure 5** is a view of the wing type seal structuring of the invention on the vented type tank lid.
**Figure 6** is a cross sectional view of the threaded type seal and the bayonet type seal of the prior art on the tank.

The drawings do not have to be necessarily scales and the details that are not relevant in order to understand the present invention can be ignored. In addition to that, the elements which are at least similar to a great extent or which have functions that are at least similar in a to a great extent are shown with the same numbers.

### Description of the Part References

- 10.: Tank lid
11. Valve ventilation threads
12. Air gap
- 20.: Lid body
- 30.: Seal structuring
31. Top radius
32. Bottom radius
33. Wing
34. Seal body
35. Connection radius
- 40.: Tank inlet
- X.: Air intake
- Y.: Air release
- Z.: Material transition
- 50.: Old type seal

### Detailed Description of the Invention

In this detailed description, the preferred structures of a wing type seal structuring (30) are merely explained in order for the issue to be understood in detail and they are not limiting in any manner.

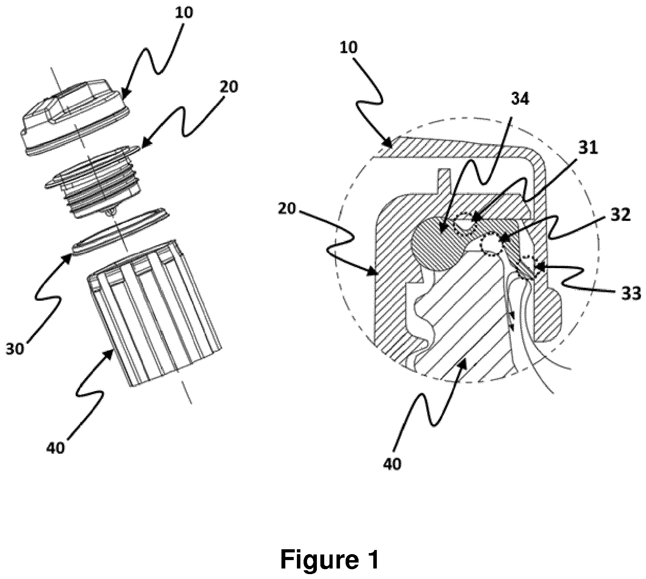

In Figure 1 a view of the wing type seal structuring (30) on a threaded type tank lid (10) is shown. According to this, the seal structuring (30) goes onto the threaded type tank inlet (40) and is located onto the frontal surface of a lid body(20) which is integrated with the threaded type tank lid (10) in order to prevent the entrance of foreign material onto the fuel tank; and this seal structuring (30) is composed of a seal body (34) and at least one wing (33). The seal body (34), which has a circular form, has the appropriate geometry to provide a sealing by being located between the lid body (20) and the tank inlet (40) and it prevents the entrance of foreign materials that may come from the outer environment into the fuel tank by the tank lid (10) being screwed. In order to prevent the disruption of the geometry of the seal during the screwing between the tank lid (10) and the tank inlet (40); a top radius (31) is located in the top part in a manner to form a gap between the said seal body (34) and the wing (33) is included and a bottom radius (32) which is formed in the bottom part as a result of the curve the said wing (33) has. The contact of the seal structuring (30) to the threaded type tank lid (10) are provided by at least one wing (33) which is formed in the continuation of the said seal body (34) and which contacts the side wall by extending from the seal body (34) through the tank lid (10) side wall.

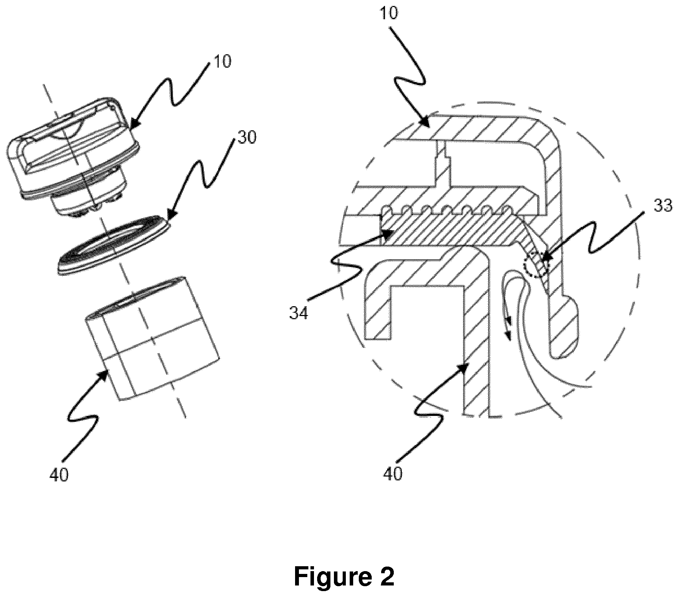

In Figure 2, a view of the wing type seal structuring (30) on the bayonet type tank lid (10) is shown. According to this, the bayonet type seal structuring (30) with a wide surface which shall prevent the entrance of the foreign materials from the outer environment by increasing the contact surface between the bayonet type tank inlet (40) and the bayonet type tank lid (10; has a wing (33) in order to perform this function. The said wing (33) performs the function of sealing by being in contact with the side wall of the bayonet type tank lid (10).

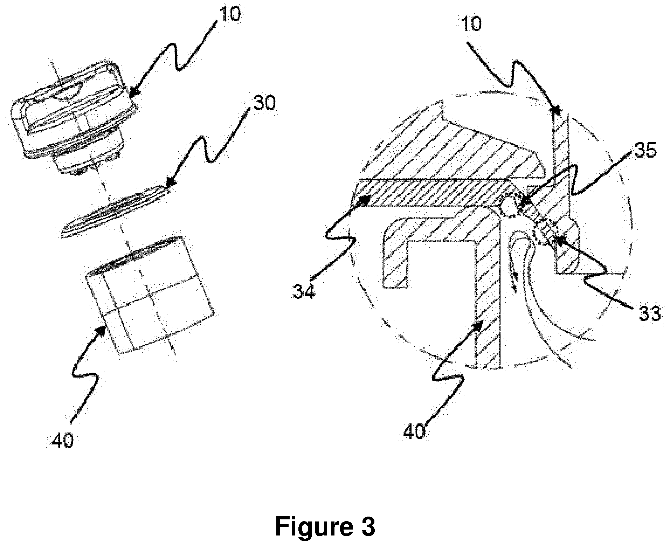

In Figure 3, another view of the wing type seal structuring (30) on the bayonet type tank lid (10) is shown. In the said seal structuring (30); by the virtue of the connection radius (35) that is formed in a manner to create a gap in the connection point of the said seal body (34) and the wing (33) in the bottom part; the seal form between the tank lid (10) and the tank inlet (40) is maintained during the screwing.

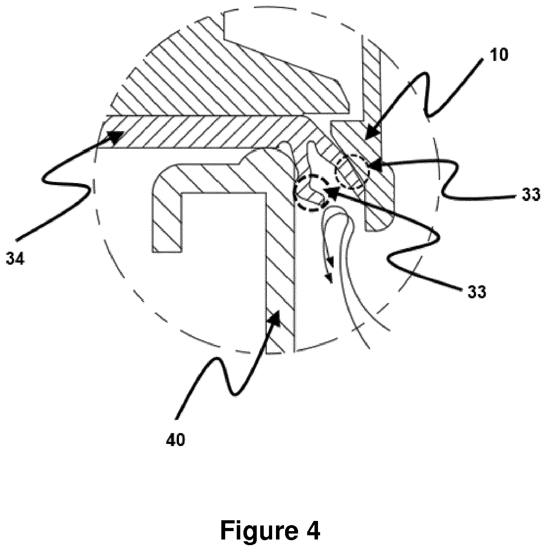

Figure 4, another view of the seal structuring (30) on the bayonet type tank lid (10) is shown. Here, there is a seal structuring (30) with double wings (33) which is obtained by adding the extra wing (33) to the existing wing type bayonet seal. There are two wings (33) which are formed in the continuation of the seal body (34) and one of which extends and contacts to the tank inlet (40) whereas the other extends and contact to the tank lid (10).

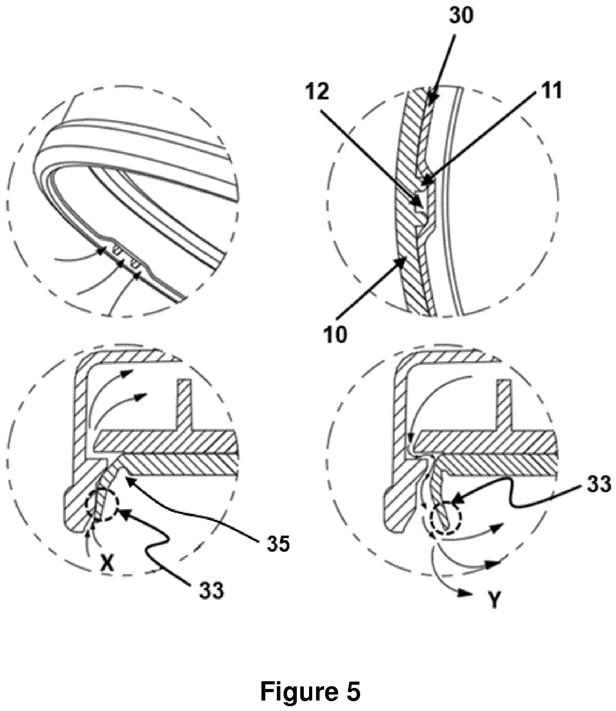

In Figure 5, a view of the wing type seal structuring (30) of the invention on the vented type tank lid (10) is shown. Here, the usage of the seal structuring (30) in the vented type tank lid (10) systems is showed. A positive pressure is created inside the tank due to the vapor pressure which is created due to the vaporization of the fuel depending on the temperature inside the tank. At the same time, the vacuum which results from the fuel being drawn to the engine from the tank creates a negative pressure. When a difference of pressure as such occurs; the wing (33) opens and closes on the valve ventilation threads (11) and provides the air intake (X) and the air release (Y) between the valve ventilation threads (11) and the seal structuring (30). Negative pressure is prevented by an air intake (X) into the tank and positive pressure is prevented by an air release (Y) into the atmosphere from the tank.

Due to the wings (33) that are added to the designs of the said threaded type, wide surfaced bayonet type, bayonet type and vented type seal structuring (30); a structuring; of which the permeability of the foreign materials such as water and dust is decreased under the high pressure and temperature conditions of the respective tank lids IP69K standards; is obtained. The materials of these seals, which are generally used in tanks containing urea and diesel oil type fuels, shall be in a manner to be proofed against the chemical features of the fuels, in order to maintain its form. Therefore; the seals that shall be used in the tanks containing diesel oil fuel are preferably produced of a material that is derivative of natural rubber of NBR (nitryl rubber) class. Since the form of the NBR class rubber material can be disrupted by interacting with the chemicals when contacting the urea liquid, the seal material in tanks which contain urea liquid as fuel shall be produced of rubber material of EPDM (Ethylene Propylene Diene Monomer) class.

## Claims

1. A seal structuring (30) for use with an embodiment comprising a tank inlet (40), a tank lid (10) having a tank lid (10) side wall, wherein the seal structuring (30) is a vented type seal and comprises:
- a seal body (34) adapted to cover the surrounding of the whole tank inlet (40) by being located between the said tank inlet (40) and the tank lid (10);
- at least one wing (33) which is formed in the continuation of the said seal body (34) and extending from the seal body (34) to tank lid (10) side wall and adapted to contact the tank lid side wall,
- and wherein the seal structuring (30) is adapted to prevent the pass of contaminating materials, which can come from the outer environment, especially between the vented type tank lid (10) and tank inlet (40), in the diesel fuel and urea liquid tanks in the commercial vehicles, and **characterized in that**;
- the wing (33) is configured to open and close on valve ventilation threads (11) of the vented type lid and to provide an air intake (X) or an air release (Y) between the valve ventilation threads (11) and the vented type seal, in order to tolerate the pressure occurring inside the tank.

2. The seal structuring (30) according to Claim 1, **characterized by comprising;** a top radius (31) located in a top part in a manner to form a gap between the said seal body (34) and the wing (33) and which prevents the disruption of the form of the seal geometry during the screwing between the tank lid (10) and the tank inlet (40).

3. The seal structuring (30) according to Claim 1, **characterized by comprising;** a bottom radius (32) which is formed in a bottom part and which prevents the disruption of the form of the seal geometry during the screwing between the tank lid (10) and the tank inlet (40), due to the curve the said wing (33) has.

4. The seal structuring (30) according to Claim 1, **characterized by comprising;** at least two wings (33) which are formed in the continuation of the said body seal (34) and one of which extends and contacts to the tank inlet (40) whereas the other extends and contacts to the tank lid (10).

5. The seal structuring (30) according to Claim 1 or Claim **4, characterized by comprising;** a connection radius (35) which is formed on the bottom part in a manner to create a gap in the connection point of the said seal body (34) and the wing (33) and which prevents the disruption of the form of the seal geometry during the screwing between the tank lid (10) and the tank inlet (40).

## Patentansprüche

1. Dichtungsstruktur (30) zur Verwendung mit einer Ausführungsform, die einen Tankeinlass (40), einen Tankdeckel (10) mit einer Seitenwand des Tankdeckels (10) umfasst, wobei die Dichtungsstruktur (30) eine Dichtung mit Entlüftung ist und umfasst:
- einen Dichtungskörper (34), der angepasst ist, um die Umgebung des gesamten Tankeinlasses (40) abzudecken, indem er zwischen dem Tankeinlass (40) und dem Tankdeckel (10) angeordnet ist;
- mindestens einen Flügel (33), der in der Fortsetzung des Dichtungskörpers (34) ausgebildet ist und sich vom Dichtungskörper (34) zur Seitenwand des Tankdeckels (10) erstreckt und angepasst ist, um die Seitenwand des Tankdeckels zu berühren,
- und wobei die Dichtungsstruktur (30) angepasst ist, um das Einleiten von kontaminierenden Materialien, die aus der äußeren Umgebung kommen können, insbesondere zwischen dem Tankdeckel (10) mit Entlüftung und dem Tankeinlass (40), in den Dieselkraftstoff- und den Harnstoffflüssigkeitstank in den Nutzfahrzeugen zu verhindern,
und **dadurch gekennzeichnet, dass**;
- der Flügel (33) konfiguriert ist, um sich an Ventilbelüftungsgewinden (11) des Deckels mit Entlüftung zu öffnen und zu schließen und einen Lufteinlass (X) oder einen Luftablass (Y) zwischen den Ventilbelüftungsgewinden (11) und der Dichtung mit Entlüftung bereitzustellen, um den im Tank auftretenden Druck zu verkraften.

2. Dichtungsstruktur (30) nach Anspruch 1, **gekennzeichnet durch das Umfassen;** eines oberen Radius (31), der in einem oberen Teil so angeordnet ist, dass er einen Spalt zwischen dem Dichtungskörper (34) und dem Flügel (33) bildet und der die Formstörung der Dichtungsgeometrie während des Verschraubens zwischen dem Tankdeckel (10) und dem Tankeinlass (40) verhindert.

3. Dichtungsstruktur (30) nach Anspruch 1, **gekennzeichnet durch das Umfassen;** eines unteren Radius (32), der in einem unteren Teil ausgebildet ist und der die Formstörung der Dichtungsgeometrie während des Verschraubens zwischen dem Tankdeckel (10) und dem Tankeinlass (40) verhindert, aufgrund der Krümmung, die der Flügel (33) aufweist.

4. Dichtungsstruktur (30) nach Anspruch 1, **gekennzeichnet durch das Umfassen;** mindestens zweier Flügel (33), die in der Fortsetzung der Körperdichtung (34) ausgebildet sind und von denen sich einer erstreckt und den Tankeinlass (40) berührt, während sich der andere erstreckt und den Tankdeckel (10) berührt.

5. Dichtungsstruktur (30) nach Anspruch 1 oder Anspruch 4, **gekennzeichnet durch das Umfassen;** eines Verbindungsradius (35), der am unteren Teil so angeordnet ist, dass er einen Spalt in dem Verbindungspunkt des Dichtungskörpers (34) und des Flügels (33) bildet und der die Formstörung der Dichtungsgeometrie während des Verschraubens zwischen dem Tankdeckel (10) und dem Tankeinlass (40) verhindert.

## Revendications

1. Structure de joint (30) à utiliser avec une mise en œuvre comprenant une entrée de réservoir (40), un bouchon de réservoir (10) ayant une paroi latérale de bouchon de réservoir (10), dans laquelle la structure de joint (30) est un joint de type à évent et comprend :
- un corps de joint (34) adapté pour couvrir l'entourage de toute l'entrée de réservoir (40) en étant situé entre ladite entrée de réservoir (40) et le bouchon de réservoir (10) ;
- au moins une aile (33) qui est formée dans le prolongement dudit corps de joint (34) et s'étendant du corps de joint (34) jusqu'à la paroi latérale du bouchon de réservoir (10) et adaptée pour entrer en contact avec la paroi latérale du bouchon de réservoir,
- et dans laquelle la structure de joint (30) est adaptée pour empêcher le passage de matériaux contaminants, qui peuvent provenir de l'environnement extérieur, en particulier entre le bouchon de réservoir (10) de type à évent et l'entrée de réservoir (40), dans les réservoirs de carburant diesel et de liquide urée dans les véhicules utilitaires, et **caractérisée en ce que** ;
- l'aile (33) est configurée pour s'ouvrir et se fermer sur des filets de ventilation de soupape (11) du bouchon de type à évent et pour fournir une entrée d'air (X) ou une libération d'air (Y) entre les filets de ventilation de soupape (11) et le joint de type à évent, afin de tolérer la pression se produisant à l'intérieur du réservoir.

2. Structure de joint (30) selon la revendication 1, **caractérisée en ce qu'elle comprend** : un rayon supérieur (31) situé dans une partie supérieure de manière à former un jeu entre ledit corps de joint (34) et l'aile (33) et qui empêche la rupture de la forme de la géométrie du joint lors du vissage entre le bouchon de réservoir (10) et l'entrée de réservoir (40).

3. Structure de joint (30) selon la revendication 1, **caractérisée en ce qu'elle comprend** : un rayon inférieur (32) qui est formé dans une partie inférieure et qui empêche la perturbation de la forme de la géométrie du joint lors du vissage entre le bouchon de réservoir (10) et l'entrée de réservoir (40), du fait de la courbure de ladite aile (33).

4. Structure de joint (30) selon la revendication 1, **caractérisée en ce qu'elle comprend** : au moins deux ailes (33) qui sont formées dans le prolongement dudit joint de corps (34) et dont l'une s'étend et est en contact avec l'entrée de réservoir (40) tandis que l'autre s'étend et est en contact avec le bouchon de réservoir (10).

5. Structure de joint (30) selon la revendication 1 ou la revendication 4, **caractérisée en ce qu'elle comprend** : un rayon de raccordement (35) qui est formé sur la partie inférieure de manière à créer un jeu dans le point de raccordement dudit corps de joint (34) et de l'aile (33) et qui empêche la rupture de la forme de la géométrie du joint lors du vissage entre le bouchon de réservoir (10) et l'entrée de réservoir (40).
